# EUROPEAN PATENT SPECIFICATION

(11) **EP 3 574 978 B1**
(45) Date of publication and mention of the grant of the patent: **01.06.2022**
(21) Application number: 19166666.8
(22) Date of filing: 02.04.2019
(51) Int. Cl.: C01B 3/02, F04B 43/04, H01M 8/04828, B01D 53/32

(54) **HYDROGEN SUPPLY SYSTEM AND DRIVING METHOD OF HYDROGEN SUPPLY SYSTEM**
WASSERSTOFFVERSORGUNGSSYSTEM UND VERFAHREN ZUR ANSTEUERUNG EINES WASSERSTOFFVERSORGUNGSSYSTEMS
SYSTÈME D'ALIMENTATION EN HYDROGÈNE ET PROCÉDÉ DE COMMANDE D'UN SYSTÈME D'ALIMENTATION EN HYDROGÈNE

(30) Priority: 30.05.2018 JP 2018103543
(43) Date of publication of application: 04.12.2019
(73) Proprietor: Panasonic Intellectual Property Management Co., Ltd., Osaka-shi, Osaka 540-6207 (JP)
(72) Inventor: WAKITA, Hidenobu, Osaka-shi, Osaka 540-6207 (JP); UKAI, Kunihiro, Osaka-shi, Osaka 540-6207 (JP); SAKAI, Osamu, Osaka-shi, Osaka 540-6207 (JP)
(74) Representative: Grünecker Patent- und Rechtsanwälte PartG mbB

(56) References cited:
- CN-C- 100 388 542
- US-B1- 6 376 111

## Description

### BACKGROUND

### 1. Technical Field

The present disclosure relates to a hydrogen supply system and a driving method of a hydrogen supply system.

### 2. Description of the Related Art

In recent years, in view of a fuel efficiency improvement and use of carbon-free fuel, fuel-cell vehicles have been attracting attention which travel while driving a motor by power generated by a fuel cell, and sale thereof has been started.

However, in popularization of fuel-cell vehicles, there have been the problems of how infrastructures for supplying hydrogen as fuel may be built and how more hydrogen stations may extensively be placed nation-wide. So far, in the hydrogen stations, methods such as purifying and compressing hydrogen by pressure swing adsorption (PSA) have been performed. However, size increases, huge placement costs, and so forth have been obstacles to nation-wide deployment of hydrogen stations.

In a coming hydrogen-based society, it is desired to develop techniques in which in addition to production of hydrogen, hydrogen may be reserved at high density and transported or used by a small capacity and at low cost. Particularly, fuel supply infrastructures have to be built for promotion of popularization of the fuel cells as distributed energy sources.

Accordingly, in order to stably supply hydrogen by the fuel supply infrastructures, various suggestions for purification and pressurization of high purity hydrogen have been made.

For example, Japanese Unexamined Patent Application Publication No. 2015-117139 discloses that a voltage is applied between an anode and a cathode of a hydrogen purification pressurization system and purification and pressurization of hydrogen may thereby be performed. Specifically, when a current flows through an electrolyte membrane by application of a voltage between the anode and the cathode, low pressure hydrogen (H₂) of the anode becomes protons (H⁺), and the protons move from the anode to the cathode through the electrolyte membrane while accompanying water molecules and are returned to high pressure hydrogen (H₂) at the cathode. Note that a laminated structure of an anode, electrolyte membrane, and a cathode will hereinafter be referred to as membrane electrode assembly (MEA).

Japanese Patent No. 5455874 suggests a hydrogen production system in which a voltage is applied between an anode and a cathode of an MEA which includes an electrolyte membrane of a solid polymer type, water supplied to the anode side is electrolyzed, oxygen is thereby produced on the anode side, and hydrogen is thereby produced on the cathode side.

Y. Hao, H. Nakajima, H. Yoshizumi, A. Inada, K. Sasaki, K. Ito, International Journal of Hydrogen Energy, 41 (2016) 13879 suggests a hydrogen pressurization device that makes an electrolyte membrane in a wet state by a water reservoir provided to a cathode while supplying hydrogen in a dry state to an anode and thereby pressurizes hydrogen in the cathode.

CN 100 388 542 C discloses a fuel cell wherein a humidifier regulates the anode humidity. The system employs a relative humidity sensor to determine the humidity of the anode gas feed stream and adjusts the operation of the humidifier accordingly to ensure that the humidity stays within an optimal range.

US 6,376,111 B1 discloses the regulation of the humidity of a feed gas for a fuel cell, based upon the resistance of the membrane in the fuel cell.

### SUMMARY

However, in related art, discussion has not sufficiently been made about a problem of moisture content lowering in a proton-conductive electrolyte membrane during driving of an electrochemical hydrogen pump.

One non-limiting and exemplary embodiment provides a hydrogen supply system that may lessen moisture content lowering in a proton-conductive electrolyte membrane during driving of an electrochemical hydrogen pump compared to related art.

The present invention provides a hydrogen supply system comprising:
an electrochemical hydrogen pump that includes a proton-conductive electrolyte membrane, an anode which is provided to a first main surface of the proton-conductive electrolyte membrane, an anode flow path which is provided on the anode and through which hydrogen flows, a cathode which is provided to a second main surface of the proton-conductive electrolyte membrane, a cathode flow path which is provided on the cathode and through which hydrogen flows, and a voltage applicator which applies a voltage between the anode and the cathode, pressurizes and sends hydrogen which is supplied to the anode via the anode flow path to the cathode by applying a voltage by the voltage applicator, and supplies the pressurized hydrogen in the cathode flow path to a hydrogen reservoir; a humidity adjuster that adjusts humidity of at least one of the anode flow path and the cathode flow path; and a controller that controls the humidity adjuster and executes control for increasing the humidity of at least one of the anode flow path and the cathode flow path when hydrogen with relative humidity of less than 100% is supplied to the anode flow path and the electrochemical hydrogen pump is driven,
wherein the controller executes the control when an integrated value of driving time of the electrochemical hydrogen pump increases, or
wherein the controller executes the control when the voltage applied between the anode and the cathode increases.

A hydrogen supply system of one aspect of the present disclosure provides an effect in which moisture content lowering in a proton-conductive electrolyte membrane during driving of an electrochemical hydrogen pump may be lessened compared to related art.

It should be noted that general or specific embodiments may be implemented as a system, a method, an integrated circuit, a computer program, a storage medium, or any selective combination thereof.

The present invention also provides a driving method of a hydrogen supply system, wherein the hydrogen supply system is the afore-mentioned hydrogen supply system, the driving method comprising:
applying a voltage between an anode and a cathode to pressurize and send hydrogen which is supplied to the anode to the cathode in an electrochemical hydrogen pump that includes a proton-conductive electrolyte membrane, the anode which is provided to a first main surface of the proton-conductive electrolyte membrane, and the cathode which is provided to a second main surface of the proton-conductive electrolyte membrane;
supplying the pressurized hydrogen in the cathode to a hydrogen reservoir; and
increasing humidity of at least one of the anode and the cathode in the applying of the voltage when hydrogen with relative humidity of less than 100% is supplied to the anode;
wherein the humidity is controlled by an integrated value of driving time of the electrochemical hydrogen pump or the voltage applied between the anode and the cathode.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a diagram that illustrates one example of experiment results in which changes in a voltage applied between an anode and a cathode of an MEA and in an IR loss of the MEA are plotted for a case where hydrogen with a high dew point is supplied to the anode and for a case where hydrogen in a dry state is supplied to the anode;
Fig. 2 is a diagram that illustrates one example of a hydrogen supply system of an embodiment;
Fig. 3A is a diagram that illustrates one example of an electrochemical hydrogen pump of the hydrogen supply system of the embodiment;
Fig. 3B is a diagram that illustrates one example of the electrochemical hydrogen pump of the hydrogen supply system of the embodiment;
Fig. 4A is a diagram that illustrates one example of a hydrogen supply system of a first practical example of the embodiment;
Fig. 4B is a diagram that illustrates one example of a driving method of the hydrogen supply system of the first practical example of the embodiment;
Fig. 4C is a diagram that illustrates one example of the driving method of the hydrogen supply system of the first practical example of the embodiment;
Fig. 4D is a diagram that illustrates one example of the driving method of the hydrogen supply system of the first practical example of the embodiment; and
Fig. 4E is a diagram that illustrates one example of the driving method of the hydrogen supply system of the first practical example of the embodiment.

### DETAILED DESCRIPTION

It has been desired to use hydrogen energy at high efficiency in related art, and it is important to improve efficiency of a hydrogen pressurization action of an electrochemical hydrogen pump. Here, when a proton-conductive electrolyte membrane (hereinafter, electrolyte membrane) is a polymer electrolyte membrane, for example, the polymer electrolyte membrane exhibits desired proton conductivity in a wet state. Thus, in order to maintain efficiency of the hydrogen pressurization action of the electrochemical hydrogen pump at a desired value, the electrolyte membrane has to be maintained in a wet state.

Accordingly, in related art, a configuration has often been employed in which hydrogen supplied to an anode of the electrochemical hydrogen pump is in advance humidified by a humidifier.

For example, the water amount in gas that passes through the humidifier may be adjusted by controlling the temperature of the humidifier. Thus, hydrogen in a wet state, which passes through the humidifier, is supplied to the anode of the electrochemical hydrogen pump, and the electrolyte membrane may thereby be maintained in a wet state by using water in hydrogen. However, in this case, for example, when an anode exit is sealed and the whole amount of such hydrogen is pressurized and sent from the anode to a cathode, flooding (a blocking phenomenon by water in a gas flow path) is possibly caused in a catalyst layer and a gas diffusion layer of the anode. Then, because hydrogen diffusibility of the electrochemical hydrogen pump is hindered when such flooding occurs, the voltage requested for a pump action for securing desired proton movement increases in the electrochemical hydrogen pump. As a result, the efficiency of the hydrogen pressurization action of the electrochemical hydrogen pump lowers.

On the other hand, as disclosed in Y. Hao, H. Nakajima, H. Yoshizumi, A. Inada, K. Sasaki, K. Ito, International Journal of Hydrogen Energy, 41 (2016) 13879, when the anode exit is sealed after water is reserved in an appropriate place (such as a separator of the cathode, for example) in the electrochemical hydrogen pump before driving, the whole amount of hydrogen may be pressurized and sent from the anode to the cathode even if hydrogen in a dry state is supplied to the electrochemical hydrogen pump. Further, in this case, it is considered that water in the electrochemical hydrogen pump is not discharged to the outside and the electrolyte membrane may be maintained in a wet state.

However, in a practical use mode of the electrochemical hydrogen pump, hydrogen pressurized by the electrochemical hydrogen pump is often temporarily reserved in a hydrogen reservoir. In this case, when hydrogen is supplied from the electrochemical hydrogen pump to the hydrogen reservoir, water that is present in the electrochemical hydrogen pump moves to the outside of the electrochemical hydrogen pump. Then, such water is removed from hydrogen by a proper condenser or the like, for example. Accordingly, the amount of water that is present in the electrochemical hydrogen pump gradually decreases as the driving time of the electrochemical hydrogen pump elapses.

Thus, when the above use mode of the electrochemical hydrogen pump is employed and where hydrogen with a low dew point or hydrogen in a dry state is supplied to the anode of the electrochemical hydrogen pump, it is considered that the moisture content of the electrolyte membrane eventually lowers even if the electrolyte membrane is maintained in a wet state.

Accordingly, a description will be made about an experiment that was performed for the purpose of verifying the above moisture content lowering in the electrolyte membrane and for the purpose of devising a method for lessening such moisture content lowering in the electrolyte membrane.

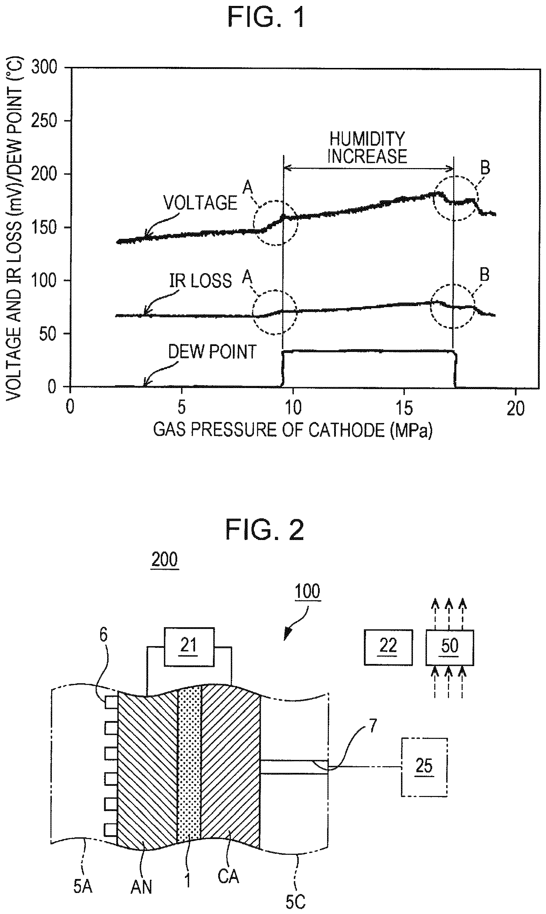

Fig. 1 is a diagram that illustrates one example of experiment results in which changes in a voltage applied between an anode and a cathode of an MEA and in an IR loss of the MEA are plotted for a case where hydrogen with a high dew point is supplied to the anode and for a case where hydrogen in a dry state is supplied to the anode.

In the MEA (cell) used in this experiment, a Ti (titanium) powder sintered body whose diameter was approximately 67 mm and which was plated with platinum was used for an anode gas diffusion layer, and a Ti fiber sintered body whose diameter was approximately 67 mm and which was plated with platinum was used for a cathode gas diffusion layer.

In this experiment, the hydrogen pressurization action was performed in which the gas pressure of the cathode of the MEA was pressurized from a prescribed initial pressure to a high pressure (here, approximately 19 MPa) at a prescribed temperature (here, 40°C) of the MEA. In the hydrogen pressurization action of the MEA, a prescribed voltage was applied between the anode and the cathode of the MEA such that the gas pressure of the anode was fixed to 0.2 MPa and a regular current of 1 A/cm² in terms of current density flowed between the anode and the cathode of the MEA. Then, the cathode of the MEA was sealed after hydrogen was supplied to the anode of the MEA, and the gas pressure of the cathode thereby gradually rose from the initial pressure as time elapsed.

A cathode exit was first opened such that the gas pressure of the cathode of the MEA became a normal pressure by communication with a pressure regulator and hydrogen was discharged at the normal pressure, and fully humidified hydrogen was supplied to the anode of the MEA such that the dew point of hydrogen (H₂) supplied to an anode entrance of the MEA became almost equivalent to the temperature of the MEA (that is, such that the relative humidity of hydrogen in the MEA became almost 100%). Then, an anode exit was also opened. Then, the MEA was caused to act by causing the current to flow between the anode and the cathode of the MEA, and control was performed such that approximately 75% of hydrogen supplied to the anode of the MEA was pressurized and sent to the cathode of the MEA. That is, approximately 25% of hydrogen supplied to the anode was discharged together with water through the anode exit.

After the MEA was caused to act for approximately 1 hour in the above state, hydrogen supplied to the anode of the MEA was switched from hydrogen in a wet state to hydrogen in a dry state such that the dew point of hydrogen (H₂) became approximately -70°C, the cathode exit was sealed, and the hydrogen pressurization action of the MEA was thereby started. Note that the pressurizing rate in this case was approximately 0.7 MPa/min. Note that the dew point is set as 0°C for convenience in Fig. 1 but was actually approximately -70°C as described above.

As a result, as indicated by dotted line portion A in Fig. 1, the IR loss and the voltage of the MEA exhibited rising tendencies at a gas pressure of the cathode of approximately 9 MPa. Accordingly, it is considered that the moisture content of the electrolyte membrane of the MEA lowered.

Then, after the IR loss and the voltage of the MEA exhibited the rising tendencies, hydrogen supplied to the anode of the MEA was switched from hydrogen in a dry state to hydrogen in a wet state similar to the above. Then, as indicated by dotted line portion B in Fig. 1, the IR loss and the voltage of the MEA exhibited falling tendencies at a gas pressure of the cathode of approximately 17 MPa. Accordingly, it is considered that the moisture content of the electrolyte membrane of the MEA rose.

After the IR loss and the voltage of the MEA exhibited the falling tendencies, hydrogen supplied to the anode of the MEA was again switched from hydrogen in a wet state to hydrogen in a dry state similar to the above, the hydrogen pressurization action of the MEA was continued, the cathode was pressurized to approximately 19 MPa, and this experiment was finished.

Note that such a configuration of the MEA, experiment conditions, and so forth are examples, and configurations, conditions, and so forth are not limited to those examples.

Consequently, it was confirmed in the experiment that even if the electrolyte membrane was maintained in a wet state before the hydrogen pressurization action of the MEA, as indicated by dotted line portion A in Fig. 1, the moisture content of the electrolyte membrane of the MEA lowered when hydrogen in a dry state was supplied to the anode of the MEA and hydrogen was discharged to the outside of the MEA through the anode exit, for example. Note that the moisture content lowering in the electrolyte membrane of the MEA when hydrogen was discharged to the outside of the MEA through the anode exit was verified in this experiment. However, it is considered that the moisture content of the electrolyte membrane of the MEA lowers similarly when hydrogen is discharged to the outside of the MEA through the cathode exit.

Further, it was confirmed in the experiment that even if the moisture content of the electrolyte membrane of the MEA lowered, as indicated by dotted line portion B in Fig. 1, the moisture content of the electrolyte membrane of the MEA was able to be improved by supplying hydrogen in a wet state to the anode of the MEA.

As described above, the inventors have found that even if the electrolyte membrane is maintained in a wet state before the hydrogen pressurization action of the electrochemical hydrogen pump, the hydrogen pressurization action of the MEA may be performed when hydrogen with a low dew point or hydrogen in a dry state is supplied to the anode of the electrochemical hydrogen pump, but the moisture content of the electrolyte membrane possibly lowers during driving of the electrochemical hydrogen pump. Further, the inventors have found that in this case, the moisture content lowering in the electrolyte membrane may be lessened by increasing the humidity of hydrogen supplied to the anode of the MEA. Here, hydrogen with a low dew point means hydrogen-containing gas whose dew point is the room temperature or lower. The room temperature means 300 K (27°C), specifically. The hydrogen concentration of this hydrogen-containing gas may correspond to pure hydrogen whose hydrogen concentration in a dry state where water vapor is removed is 99 mass% or more or may correspond to crudely purified hydrogen whose hydrogen concentration is approximately 10% to 99%. Further, hydrogen in a dry state means hydrogen-containing gas whose dew point is -60°C or lower. The hydrogen concentration of this hydrogen-containing gas may correspond to pure hydrogen whose hydrogen concentration in a dry state where water vapor is removed is 99 mass% or more or may correspond to crudely purified hydrogen whose hydrogen concentration is approximately 10% to 99%.

Accordingly, a hydrogen supply system according to the invention includes:
an electrochemical hydrogen pump that includes a proton-conductive electrolyte membrane, an anode which is provided to a first main surface of the proton-conductive electrolyte membrane, an anode flow path which is provided on the anode and through which hydrogen flows, a cathode which is provided to a second main surface of the proton-conductive electrolyte membrane, a cathode flow path which is provided on the cathode and through which hydrogen flows, and a voltage applicator which applies a voltage between the anode and the cathode, pressurizes and sends hydrogen which is supplied to the anode via the anode flow path to the cathode by applying a voltage by the voltage applicator, and supplies the pressurized hydrogen in the cathode flow path to a hydrogen reservoir;
a humidity adjuster that adjusts humidity of at least one of the anode flow path and the cathode flow path; and
a controller that controls the humidity adjuster and executes control for increasing the humidity of at least one of the anode flow path and the cathode flow path when hydrogen with relative humidity of less than 100% is supplied to the anode flow path and the electrochemical hydrogen pump is driven,
wherein the controller executes the control when an integrated value of driving time of the electrochemical hydrogen pump increases, or
wherein the controller executes the control when the voltage applied between the anode and the cathode increases.

In such a configuration, the hydrogen supply system may lessen the moisture content lowering in the proton-conductive electrolyte membrane during driving of the electrochemical hydrogen pump compared to related art.

Specifically, the hydrogen supply system performs contro for increasing the humidity of at least one of the anode flow path and the cathode flow path at an appropriate timing and may thereby inhibit the moisture content lowering in the proton-conductive electrolyte membrane, which occurs due to movement of water to the outside of the electrochemical hydrogen pump when hydrogen is supplied from the electrochemical hydrogen pump to the hydrogen reservoir.

Thus, the hydrogen supply system according to the invention may inhibit an increase in the voltage requested for the pump action due to the moisture content lowering in the proton-conductive electrolyte membrane in the electrochemical hydrogen pump and may thus maintain high efficiency of the hydrogen pressurization action of the electrochemical hydrogen pump.

Here, the "relative humidity" means relative humidity at a temperature of a cell that includes the proton-conductive electrolyte membrane, the anode, and the cathode. Further, although hydrogen flows through the anode flow path and the cathode flow path, the hydrogen concentration need not be 100%. It is sufficient that hydrogen-containing gas that includes hydrogen flows.

A driving method of a hydrogen supply system, wherein the hydrogen supply system is the above mentioned hydrogen supply system, the driving method according to the invention includes:
applying a voltage between an anode and a cathode to pressurize and send hydrogen which is supplied to the anode to the cathode in an electrochemical hydrogen pump that includes a proton-conductive electrolyte membrane, the anode which is provided to a first main surface of the proton-conductive electrolyte membrane, and the cathode which is provided to a second main surface of the proton-conductive electrolyte membrane;
supplying the pressurized hydrogen in the cathode to a hydrogen reservoir; and
increasing humidity of at least one of the anode and the cathode in the applying of the voltage when hydrogen with relative humidity of less than 100% is supplied to the anode; wherein the humidity is controlled by an integrated value of driving time of the electrochemical hydrogen pump (100) or the voltage applied between the anode and the cathode.

Accordingly, the driving method of the afore-mentioned hydrogen supply system lessens the moisture content lowering in the proton-conductive electrolyte membrane during driving of the electrochemical hydrogen pump compared to related art.

Specifically, in the driving method of the hydrogen supply system, the increasing of the humidity of at least one of the anode and the cathode at an appropriate timing is performed, and the moisture content lowering in the proton-conductive electrolyte membrane is thereby inhibited, which occurs due to movement of water to the outside of the electrochemical hydrogen pump when hydrogen is supplied from the electrochemical hydrogen pump to the hydrogen reservoir.

Thus, the driving method of the hydrogen supply system inhibits an increase in the voltage requested for the pump action due to the moisture content lowering in the proton-conductive electrolyte membrane in the electrochemical hydrogen pump and may thus maintain high efficiency of the hydrogen pressurization action of the electrochemical hydrogen pump.

Here, the "relative humidity" means the relative humidity at the temperature of the cell that includes the proton-conductive electrolyte membrane, the anode, and the cathode.

Further, the controller may intermittently execute the control.

Hypothetically, when hydrogen in the electrochemical hydrogen pump is regularly in a wet state, the water amount in the electrochemical hydrogen pump possibly becomes excessive. Further, when the water amount in the electrochemical hydrogen pump becomes excessive, flooding is possibly caused in the electrochemical hydrogen pump. However, the hydrogen supply system of this aspect intermittently executes the control for increasing the humidity of at least one of the anode flow path and the cathode flow path and may thereby reduce such a possibility.

Further, as for the hydrogen supply system of the present disclosure, in the hydrogen supply system, the controller executes the control for increasing the humidity of at least one of the anode flow path and the cathode flow path when an integrated value of driving time of the electrochemical hydrogen pump increases.

When water that moves together with hydrogen from the electrochemical hydrogen pump is removed by a condenser, the water amount to be removed by the condenser is decided in accordance with the temperature, pressure, and volume of hydrogen that passes through the condenser. Further, the integrated amount of hydrogen that passes through the condenser depends on the integrated value of the driving time of the electrochemical hydrogen pump. Thus, in the hydrogen supply system of this aspect, the controller executes the control at an appropriate timing based on the increase in the integrated value of the driving time of the electrochemical hydrogen pump.

Incidentally, as it may be understood from dotted line portions A in Fig. 1, the start timing of a humidity increase in hydrogen is identified by detecting an increase in at least one of a resistance between the anode and the cathode and the voltage applied between the anode and the cathode.

Accordingly, as for the hydrogen supply system of the present disclosure, in the hydrogen supply system of the first aspect, the controller controls the humidity adjuster and executes the control for increasing the humidity of at least one of the anode flow path and the cathode flow path when at least one of a resistance between the anode and the cathode and the voltage applied between the anode and the cathode increases. Accordingly, the controller executes the control at an appropriate timing based on an increase in at least one of the above resistance and voltage.

Thus, the hydrogen supply system quickly handles drying-up of the proton-conductive electrolyte membrane and thus appropriately inhibits lowering of efficiency of the hydrogen pressurization action of the electrochemical hydrogen pump compared to a case where such control is not performed.

Further, as it may be understood from dotted line portions B in Fig. 1, the stop timing of a humidity increase in hydrogen is identified by detecting lowering of at least one of the resistance between the anode and the cathode and the voltage applied between the anode and the cathode.

Accordingly, as for the hydrogen supply system of the present disclosure, in the hydrogen supply system, the controller controls the humidity adjuster and stops the control for increasing the humidity of at least one of the anode flow path and the cathode flow path when at least one of a resistance between the anode and the cathode and the voltage applied between the anode and the cathode lowers. Accordingly, the controller stops the control at an appropriate timing based on lowering of at least one of the above resistance and voltage.

Thus, the hydrogen supply system inhibits supply of water above a requested amount to the proton-conductive electrolyte membrane and thus lessens excess of the water amount in the electrochemical hydrogen pump compared to a case where the stopping control is not performed. Further, flooding is possibly caused in the electrochemical hydrogen pump when the water amount in the electrochemical hydrogen pump becomes excessive. However, the hydrogen supply system of this aspect may reduce such a possibility by the stopping control.

An embodiment of the present disclosure will hereinafter be described with reference to the attached drawings. The embodiment described in the following represents one example of each of the above aspects. Thus, shapes, materials, configuration elements, arrangement positions and connection manners of configuration elements, and so forth that are described in the following do not limit any of the above aspects unless those are described in claims. Further, the configuration elements that are not described in the independent claims which provide the most superordinate concepts of the aspects among the configuration elements in the following will be described as arbitrary configuration elements. Further, the configuration elements to which the same reference characters are given in the drawings may not be described. Further, the drawings schematically illustrate the configuration elements for easy understanding. Shapes, dimension ratios, and so forth may not accurately be depicted.

### (Embodiment)

### [Device Configuration]

Fig. 2 is a diagram that illustrates one example of a hydrogen supply system of an embodiment according to the invention.

In the example illustrated in Fig. 2, a hydrogen supply system 200 includes an electrochemical hydrogen pump 100, a humidity adjuster 22, and a controller 50. Note that a hydrogen reservoir 25 indicated by two-dot chain lines in Fig. 2 may be provided together with the hydrogen supply system 200.

Here, the electrochemical hydrogen pump 100 includes a proton-conductive electrolyte membrane (hereinafter, electrolyte membrane 1), an anode AN, a cathode CA, and a voltage applicator 21.

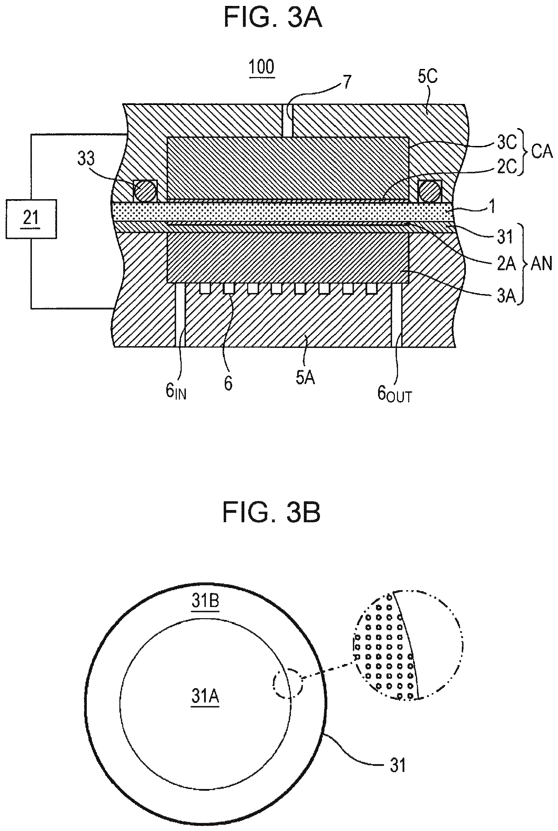

Note that as indicated by two-dot chain lines in Fig. 2, the electrochemical hydrogen pump 100 is often provided with an anode separator 5A (see Fig. 3A) that forms an anode flow path 6 of the electrochemical hydrogen pump 100 and a cathode separator 5C (see Fig. 3A) that forms a cathode flow path 7.

The electrolyte membrane 1 includes a pair of main surfaces. The electrolyte membrane 1 may have any configuration as long as it is a membrane having proton conductivity. For example, as the electrolyte membrane 1, a fluorine-based polymer electrolyte membrane, a hydrocarbon-based electrolyte membrane, and so forth may be raised. Specifically, for example, as the electrolyte membrane 1, Nafion^{®} (E. I. du Pont de Nemours and Company), Aciplex^{®} (Asahi Kasei Corporation), or the like may be used. However, the electrolyte membrane 1 is not limited to those.

The anode AN is provided on one main surface of the electrolyte membrane 1. The anode AN includes an anode catalyst layer and an anode gas diffusion layer, but details of the anode catalyst layer and the anode gas diffusion layer will be described later.

The cathode CA is provided on the other main surface of the electrolyte membrane 1. The cathode CA includes a cathode catalyst layer and a cathode gas diffusion layer, but details of the cathode catalyst layer and the cathode gas diffusion layer will be described later.

The anode flow path 6 is a flow path which is provided on the anode AN and through which hydrogen flows. For example, as illustrated in Fig. 2, the anode flow path 6 may be formed on a main surface of the anode separator 5A, with which the anode AN contacts, in a serpentine-like manner. Accordingly, hydrogen (H₂) is supplied to the anode AN via the anode flow path 6.

The cathode flow path 7 is a flow path which is provided on the cathode CA and through which hydrogen flows. For example, as illustrated in Fig. 2, the cathode flow path 7 may be formed to pass through the cathode separator 5C such that the cathode flow path 7 communicates with the outside from an appropriate place on the cathode CA. Accordingly, hydrogen (H₂) in the cathode CA in a high pressure state is supplied to the hydrogen reservoir 25 on the outside, for example.

The voltage applicator 21 is a device that applies a voltage between the anode AN and the cathode CA.

The voltage applicator 21 may have any configuration as long as it may apply a voltage between the anode AN and the cathode CA. Specifically, a high electrical potential side terminal of the voltage applicator 21 is connected with the anode AN, and a low electrical potential side terminal of the voltage applicator 21 is connected with the cathode CA. Accordingly, energization is performed between the anode AN and the cathode CA by using the voltage applicator 21.

As the voltage applicator 21, for example, a DC/DC converter, an AC/DC converter, and so forth may be raised. The DC/DC converter is used when the voltage applicator 21 is connected with a direct current power source such as a battery, and the AC/DC converter is used when the voltage applicator 21 is connected with an alternating current power source such as a commercial power source.

The electrochemical hydrogen pump 100 is a device that receives application of voltage by the voltage applicator 21, thereby pressurizes and sends hydrogen supplied to the anode AN via the anode flow path 6 to the cathode CA, and supplies the pressurized hydrogen in the cathode flow path 7 to the hydrogen reservoir 25. Note that as the hydrogen reservoir 25, for example, a tank may be raised.

A specific example of the above electrochemical hydrogen pump 100 will be described later.

In the hydrogen supply system 200 of this embodiment, hydrogen may be supplied from the hydrogen reservoir 25 to a proper hydrogen consuming body after hydrogen is supplied from the electrochemical hydrogen pump 100 to the hydrogen reservoir 25. As such a hydrogen consuming body, for example, a fuel cell for household use or for an automobile and so forth may be raised.

The humidity adjuster 22 is a device that adjusts the humidity of at least one of the anode flow path 6 and the cathode flow path 7. The humidity adjuster 22 may have any configuration as long as it may adjust such humidity of hydrogen that is present in at least one of the anode flow path 6 and the cathode flow path 7. As the humidity adjuster 22, for example, a humidifier may be raised. Further, as the humidifier, for example, a humidifier by a bubbler procedure or the like may be used which causes hydrogen to pass through water controlled to an appropriate temperature. However, embodiments are not limited to this. Note that details of the humidifier by the bubbler procedure will be described in a practical example.

The controller 50 controls the humidity adjuster 22 and thereby executes control for increasing the humidity of at least one of the anode flow path 6 and the cathode flow path 7 when hydrogen with relative humidity of less than 100% is supplied to the anode flow path 6 and the electrochemical hydrogen pump 100 is driven. Further, the controller 50 intermittently executes the control.

The controller 50 may have any configuration as long as it has a control function. The controller 50, for example, includes an arithmetic circuit (not illustrated) and a storage circuit (not illustrated) that stores a control program. As the arithmetic circuit, for example, an MPU, a CPU, and so forth may be raised. As the storage circuit, for example, a memory and so forth may be raised. The controller 50 may be configured with a single controller that performs centralized control or may be configured with plural controllers that mutually and cooperatively perform distributed control.

### [Specific Example of Electrochemical Hydrogen Pump]

Fig. 3A and Fig. 3B are diagrams that illustrate one example of the electrochemical hydrogen pump of the hydrogen supply system of the embodiment. Note that Fig. 3B illustrates a diagram in which an anode gas diffusion plate 31 of the electrochemical hydrogen pump 100 is seen in a plan view.

In the example illustrated in Fig. 3A, the electrochemical hydrogen pump 100 includes the electrolyte membrane 1, the anode AN, the cathode CA, the anode separator 5A, the cathode separator 5C, the voltage applicator 21, and a sealing member 33.

Note that the electrolyte membrane 1 is similar to the electrochemical hydrogen pump 100 in Fig. 1, and a description thereof will thus not be made. Further, the configuration of the voltage applicator 21 is similar to the above, and a detailed description thereof will thus not be made.

Here, as illustrated in Fig. 3A, the anode AN (electrode) is configured with the anode gas diffusion plate 31, an anode catalyst layer 2A, and an anode gas diffusion layer 3A. The cathode CA (electrode) is configured with a cathode catalyst layer 2C and a cathode gas diffusion layer 3C.

The anode catalyst layer 2A is provided on one main surface of the electrolyte membrane 1. The anode catalyst layer 2A may include platinum (Pt) or the like as catalyst metal, for example, but embodiments are not limited to this. Note that although not illustrated, in a plan view, a sealing member is provided so as to surround the anode catalyst layer 2A, and hydrogen gas of the anode AN is appropriately sealed by this sealing member.

The cathode catalyst layer 2C is provided on the other main surface of the electrolyte membrane 1. The cathode catalyst layer 2C may include Pt or the like as catalyst metal, for example, but embodiments are not limited to this. In a plan view, the sealing member 33 is provided so as to surround the cathode catalyst layer 2C, and hydrogen gas of the cathode CA is appropriately sealed by the sealing member 33.

Because various methods may be raised as catalyst adjustment methods for the cathode catalyst layer 2C and the anode catalyst layer 2A, adjustment methods are not particularly limited. For example, as supports of the catalysts, electrically-conductive oxide powder, carbon-based powder, and so forth may be raised. As the carbon-based powder, for example, powder of graphite, carbon black, electrically conductive activated carbon, and so forth may be raised. A method for supporting platinum or other catalyst metal on the support such as carbon is not particularly limited. For example, a method such as powder mixing or liquid-phase mixing may be used. As the latter liquid-phase mixing, for example, a method, in which the support such as carbon is dispersed in a catalyst component colloid liquid and adsorption is performed, or the like may be raised. Further, using an active oxygen removing agent as the support in accordance with request, platinum or other catalyst metal may be supported by a method similar to the above method. A supported state of the catalyst metal such as platinum on the support is not particularly limited. For example, the catalyst metal may be atomized and supported on the support in a highly dispersed state.

The anode gas diffusion layer 3A is configured with a porous body or the like and has corrosion resistance, electrical conductivity, and gas diffusibility, for example. Further, the anode gas diffusion layer 3A is desirably configured with a high rigidity material that may inhibit displacement or deformation of configuration members which occurs due to a differential pressure between the anode AN and the cathode CA in the hydrogen pressurization action of the electrochemical hydrogen pump 100.

The anode separator 5A is provided to cover one main surface and side surfaces of the anode gas diffusion layer 3A. Specifically, the anode gas diffusion layer 3A is housed in a recess in a central portion of the anode separator 5A. Further, the serpentine-like anode flow path 6 is formed on the main surface of the anode separator 5A with which the anode gas diffusion layer 3A contacts. Accordingly, when hydrogen gas passes through the anode flow path 6 between an anode entrance 6_{IN} and an anode exit 6_{OUT}, hydrogen gas is supplied to the anode gas diffusion layer 3A.

Note that the anode flow path 6 may be formed by providing a serpentine-like slit hole in a plate member separate from the anode separator 5A and integrally joining both of those or may be formed by processing a serpentine-like flow path groove in the main surface of the anode separator 5A.

The anode separator 5A is configured with a metal member or the like and has corrosion resistance and electrical conductivity, for example. As a material of the anode separator 5A, titanium plated with platinum or the like may be used, for example.

As illustrated in Fig. 3A and Fig. 3B, a circular anode gas diffusion plate 31 may be provided to the electrochemical hydrogen pump 100.

The anode gas diffusion plate 31 includes a circular central portion 31A that contacts with the other main surface of the anode gas diffusion layer 3A and the anode catalyst layer 2A and an annular peripheral portion 31B that contacts with the anode separator 5A and the electrolyte membrane 1.

As illustrated in Fig. 3B, plural vent holes are formed in the central portion 31A of the anode gas diffusion plate 31. Accordingly, hydrogen gas may pass between the anode catalyst layer 2A and the anode gas diffusion layer 3A through the vent holes. The vent holes may be openings of approximately several ten microns that are uniformly provided at intervals of several ten microns, for example. However, the size and interval of the vent hole are not limited to those. Note that such a vent hole may be formed by laser processing or the like, for example.

Meanwhile, the vent holes are not formed in the peripheral portion 31B of the anode gas diffusion plate 31, and the peripheral portion 31B is flat.

The anode gas diffusion plate 31 is configured with a metal plate or the like and has corrosion resistance and electrical conductivity, for example. As the anode gas diffusion plate 31, a titanium plate that is plated with platinum may be used, for example.

The sealing member 33 is provided on the peripheral portion 31B (flat portion) of the anode gas diffusion plate 31 via the electrolyte membrane 1. Thus, the electrolyte membrane 1 is pressed to the peripheral portion 31B of the anode gas diffusion plate 31 by the sealing member 33. Note that the sealing member 33 is formed into an annular shape in a plan view. As the sealing member 33, for example, an O-ring or the like may be used.

The above anode gas diffusion plate 31 and sealing member 33 are examples, and embodiments are not limited to those examples. For example, the anode gas diffusion plate 31 is configured with a circular plate but is not limited to this. When the shape of the anode gas diffusion layer 3A in a plan view is a rectangular shape, for example, the shape of the anode gas diffusion plate 31 in a plan view may be a rectangular shape, or the shape of the sealing member 33 in a plan view may be a rectangular annular shape.

The cathode gas diffusion layer 3C is configured with a porous body or the like and has corrosion resistance, electrical conductivity, and gas diffusibility, for example. For example, the cathode gas diffusion layer 3C is configured with a porous body, which has corrosion resistance and electrical conductivity, such as a titanium fiber sintered body plated with platinum. Further, the cathode gas diffusion layer 3C is desirably configured with an elastic material that is less likely to buckle and may follow displacement or deformation of configuration members which occurs due to the differential pressure between the anode AN and the cathode CA in the hydrogen pressurization action of the electrochemical hydrogen pump 100.

The cathode separator 5C is provided to cover a main surface and side surfaces of the cathode gas diffusion layer 3C. Specifically, the cathode gas diffusion layer 3C is housed in a recess in a central portion of the cathode separator 5C. Further, the cathode flow path 7 for leading hydrogen gas of the cathode gas diffusion layer 3C in a high pressure state to the outside is provided to an appropriate place of the cathode separator 5C. The number of cathode flow path 7 may be one as illustrated in Fig. 3A or may be plural.

The cathode separator 5C is configured with a metal member or the like and has corrosion resistance and electrical conductivity, for example. As a material of the cathode separator 5C, titanium plated with platinum or the like may be used, for example.

Note that the sealing member 33 is provided to the cathode separator 5C. Specifically, the cathode gas diffusion layer 3C is housed in the recess in the central portion of the cathode separator 5C, and an outer periphery portion of the cathode separator 5C contacts with the electrolyte membrane 1. Further, an annular groove is formed in an appropriate place of the outer periphery portion, and the sealing member 33 is fitted in the annular groove.

Note that the shape of the cathode separator 5C may be a cylindrical body with a bottom or may be a rectangular tubular body with a bottom. However, the cathode separator 5C is configured with a cylindrical body, and resistance against the gas pressure of the cathode separator 5C may be improved compared to a case where the cathode separator 5C is configured with a rectangular tubular body.

Here, although not illustrated in Fig. 3A, members and apparatuses that are requested for the hydrogen pressurization action of the electrochemical hydrogen pump 100 of this embodiment are properly provided.

For example, in the electrochemical hydrogen pump 100, approximately 10 to 200 unit cells, each of which is configured with the MEA, the anode separator 5A, and the cathode separator 5C, may be stacked to configure a laminated body, and the laminated body may be interposed between end plates via a current collector plate and an insulating plate, and both of the end plates may be fastened together by a fastening rod or the like. Note that the number of such unit cells may be set to a proper number based on operation conditions of the electrochemical hydrogen pump 100. In this case, in order to avoid leakage of high pressure gas from the electrochemical hydrogen pump 100 to the outside, sealing members such as O-rings or gaskets are provided from both sides of the MEA, and the sealing members may integrally be assembled with the MEA in advance. Further, on the outside of the MEA, the electrically conductive anode separator 5A and cathode separator 5C for mechanically fixing the MEA and electrically connecting the neighboring MEAs with each other in series are arranged.

Further, hydrogen may be supplied from a prescribed hydrogen source to the anode AN of the electrochemical hydrogen pump 100. Hydrogen of such a hydrogen source may be generated by a water electrolysis device or the like, for example.

Note that the above various members and apparatuses, which are not illustrated, are examples, and embodiments are not limited to those examples.

### [Action]

A driving method (action) of the hydrogen supply system 200 of this embodiment will hereinafter be described with reference to the drawings.

The following action may be performed by a control program from the storage circuit of the controller 50, which is performed by the arithmetic circuit of the controller 50, for example. However, performing the following action by the controller is not necessarily requested. An operator may perform a portion of the action.

First, hydrogen (H₂) with a low dew point or hydrogen in a dry state is supplied to the anode flow path 6 through the anode entrance 6_{IN} in a state where the electrolyte membrane 1 of the electrochemical hydrogen pump 100 is maintained in a wet state. Then, this hydrogen is supplied to the anode AN of the electrochemical hydrogen pump 100 through the anode flow path 6. Then, power of the voltage applicator 21 is fed to the electrochemical hydrogen pump 100.

Then, in the anode catalyst layer 2A of the anode AN of the electrochemical hydrogen pump 100, hydrogen is separated into hydrogen ions (protons) and electrons by an oxidation reaction (formula (1)). A proton is conducted through the inside of the electrolyte membrane 1 in a wet state and moves to the cathode catalyst layer 2C of the cathode CA. An electron moves to the cathode catalyst layer 2C through the voltage applicator 21. Then, in the cathode catalyst layer 2C of the cathode CA, hydrogen is again generated by a reduction reaction (formula (2)).

In this case, it is known that when protons are conducted through the electrolyte membrane 1, a prescribed amount of water moves from the anode AN to the cathode CA as electro-osmotic water while accompanying protons.

Here, a pressure drop of a gas lead-out route is increased by using a flow amount adjuster (for example, a back pressure valve, an adjusting valve, or the like provided in piping, which is not illustrated) that is provided in the gas lead-out route (not illustrated) through which hydrogen led out from the cathode flow path 7 of the electrochemical hydrogen pump 100 flows, and hydrogen generated in the cathode may thereby be pressurized. Thus, hydrogen in a high pressure state may be supplied from the electrochemical hydrogen pump 100 to the hydrogen reservoir 25 at an appropriate timing.

Anode: H₂ (low pressure) → 2H⁺ + 2e⁻ ... (1)

Cathode: 2H⁺ + 2e⁻ → H₂ (high pressure) ... (2)

Incidentally, because water moves to the outside of the electrochemical hydrogen pump 100 when hydrogen is supplied from the electrochemical hydrogen pump 100 to the hydrogen reservoir 25, the moisture content of the electrolyte membrane 1 possibly lowers during driving of the electrochemical hydrogen pump 100 when hydrogen with a low dew point or hydrogen in a dry state is supplied to the anode AN of the electrochemical hydrogen pump 100.

Accordingly, the driving method of the hydrogen supply system 200 of this embodiment includes:
applying a voltage between the anode AN and the cathode CA to pressurize and send hydrogen supplied to the anode AN to the cathode CA in the electrochemical hydrogen pump 100,
supplying the pressurized hydrogen in the cathode CA to the hydrogen reservoir 25, and
increasing the humidity of at least one of the anode AN and the cathode CA in the applying of the voltage when hydrogen with relative humidity of less than 100% is supplied to the anode AN. Here, the increasing of the humidity may be conducted at any of timing before, during, and after execution of the supplying of the pressurized hydrogen. However, it is appropriate to conduct the increasing of the humidity at a timing during or after the execution of the supplying of the pressurized hydrogen.

Consequently, the hydrogen supply system 200 and the driving method of the hydrogen supply system 200 of this embodiment may lessen the moisture content lowering in the electrolyte membrane 1 during driving of the electrochemical hydrogen pump 100 compared to related art.

Specifically, the control for increasing the humidity of at least one of the anode flow path 6 and the cathode flow path 7 (the increasing of the humidity of at least one of the anode AN and the cathode CA) is performed, and the moisture content lowering in the electrolyte membrane 1 may thereby be inhibited, which occurs due to movement of water to the outside of the electrochemical hydrogen pump 100 when hydrogen is supplied from the electrochemical hydrogen pump 100 to the hydrogen reservoir 25.

Thus, the hydrogen supply system 200 and the driving method of the hydrogen supply system 200 of this embodiment may inhibit an increase in the voltage requested for a pump action due to the moisture content lowering in the electrolyte membrane 1 in the electrochemical hydrogen pump 100 and may thus maintain high efficiency of the hydrogen pressurization action of the electrochemical hydrogen pump 100.

Further, hypothetically, when hydrogen in the electrochemical hydrogen pump 100 is regularly in a wet state, the water amount in the electrochemical hydrogen pump 100 possibly becomes excessive. Further, when the water amount in the electrochemical hydrogen pump 100 becomes excessive, flooding is possibly caused in the electrochemical hydrogen pump 100.

However, the hydrogen supply system 200 of this embodiment intermittently executes the control for increasing the humidity of at least one of the anode flow path 6 and the cathode flow path 7 and may thereby reduce such a possibility.

### (First Practical Example)

### [Device Configuration]

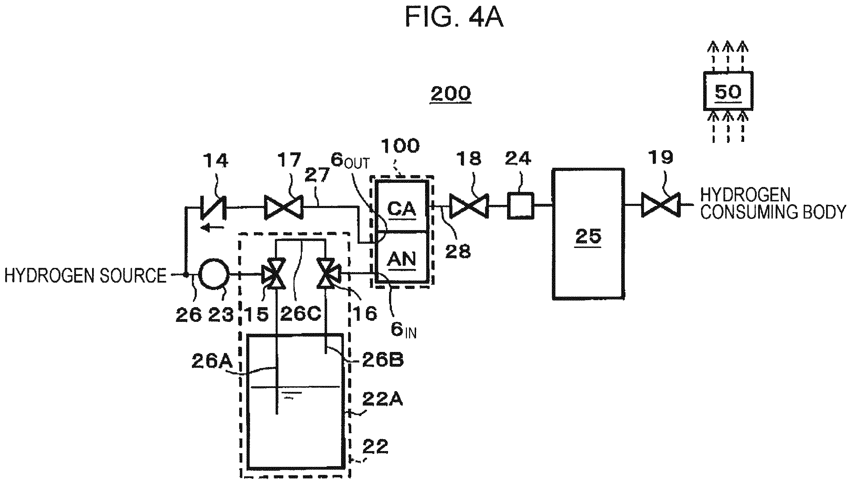

Fig. 4A is a diagram that illustrates one example of a hydrogen supply system of a first practical example of the embodiment.

In the example illustrated in Fig. 4A, the hydrogen supply system 200 includes the electrochemical hydrogen pump 100, the humidity adjuster 22, a hydrogen supplier 23, a condenser 24, the hydrogen reservoir 25, and the controller 50.

The electrochemical hydrogen pump 100 and the hydrogen reservoir 25 are similar to the embodiment of the present disclosure, and descriptions thereof will thus not be made.

In the hydrogen supply system 200 of this practical example, the humidity adjuster 22 includes a bubbling tank 22A that reserves warm water, a pair of three-way valve 15 and three-way valve 16, an apparatus that adjusts the water temperature in the bubbling tank 22A (for example, a heater or the like; not illustrated), a temperature detector (not illustrated) that detects the water temperature, and so forth. As the three-way valve 15 and the three-way valve 16, for example, a three-way solenoid valve or the like may be used.

That is, the hydrogen supply system 200 of this practical example is configured such that hydrogen (H₂) supplied to the anode entrance 6_{IN} of the anode AN is humidified to a desired humidification amount by the bubbler procedure. Specifically, because the dew point of hydrogen that passes through the warm water in the bubbling tank 22A becomes almost equivalent to the temperature of the warm water, the humidification amount of hydrogen supplied to the anode entrance 6_{IN} may be adjusted by temperature control of such warm water.

The hydrogen supplier 23 is an apparatus that is provided in a hydrogen supply route 26 for supplying hydrogen from the hydrogen source to the anode entrance 6_{IN} and adjusts the flow amount of hydrogen which flows through the hydrogen supply route 26. The hydrogen supplier 23 is configured with a pressurizer and a flow amount adjusting valve, for example, but may be configured with either one of those. As the pressurizer, a pump is used, for example. However, embodiments are not limited to this. Note that as described above, hydrogen of the hydrogen source may be generated by a water electrolysis device or the like, which is not illustrated.

The hydrogen supplier 23 is provided with the three-way valve 15 and the three-way valve 16.

Here, a communication route between the hydrogen supplier 23 and the three-way valve 15 is connected with both of a route 26A that extends into the warm water in the bubbling tank 22A via the three-way valve 15 and a bypass route 26C that bypasses the bubbling tank 22A.

A communication route between the anode entrance 6_{IN} and the three-way valve 16 is connected with both of a route 26B that extends to an upper space in the bubbling tank 22A via the three-way valve 16 and the bypass route 26C that bypasses the bubbling tank 22A.

Thus, the hydrogen supply system 200 is configured to be capable of selecting either of causing hydrogen, which is not yet supplied to the anode entrance 6_{IN}, to pass through the warm water in the bubbling tank 22A or of causing the hydrogen to bypass the bubbling tank 22A by operations of the three-way valve 15 and the three-way valve 16.

A recycle route 27 is a flow path for supplying hydrogen, which is sent out from the anode exit 6_{OUT}, into the hydrogen supply route 26 that is upstream of the hydrogen supplier 23.

The recycle route 27 is provided with an on-off valve 17 and a check valve 14. As the on-off valve 17, for example, a solenoid valve or the like may be used. The check valve 14 is arranged such that the direction in which the hydrogen sent out from the anode exit 6_{OUT} moves toward a connection portion between the recycle route 27 and the hydrogen supply route 26 becomes the forward direction. This inhibits hydrogen in the recycle route 27 from flowing backward when the on-off valve 17 is opened.

The condenser 24 is provided in a hydrogen lead-out route 28 for supplying high pressure hydrogen, which is led out from the cathode flow path 7 (see Fig. 3A) of the cathode CA, to the hydrogen reservoir 25 and is configured to remove water in this hydrogen. Further, an on-off valve 18 is provided in the hydrogen lead-out route 28 between the condenser 24 and the cathode flow path 7 of the cathode CA. As the on-off valve 18, for example, a solenoid valve or the like may be used.

Note that hydrogen reserved in the hydrogen reservoir 25 may be supplied to a hydrogen consuming body (for example, a fuel cell or the like) at an appropriate timing by opening an on-off valve 19 (for example, a solenoid valve or the like).

The above configuration of the hydrogen supply system 200 is an example, and embodiments are not limited to this example. For example, it is possible to configure a switching device for the routes, through which the hydrogen not yet supplied to the anode entrance 6_{IN} flows, by a combination of plural two-way valves instead of the three-way valve 15 and the three-way valve 16 that are illustrated in Fig. 4A.

When the integrated value of driving time of the electrochemical hydrogen pump 100 increases, the controller 50 controls the humidity adjuster 22 and thereby executes control for increasing the humidity of at least one of the anode flow path 6 and the cathode flow path 7. Note that the integrated value of the driving time of the electrochemical hydrogen pump 100 includes values that are directly or indirectly related with the integrated value of the driving time. The directly related value is the integrated value itself of the driving time. The indirectly related values are values correlated with the integrated value of the driving time.

For example, the integrated value of a current that flows between the anode AN and the cathode CA, the integrated amount of hydrogen that passes through the condenser 24, the integrated amount of hydrogen supplied to the hydrogen reservoir 25, and so forth are raised.

### [Action]

A driving method (action) of the hydrogen supply system 200 of the first practical example of the embodiment will hereinafter be described with reference to the drawings.

The following action may be performed by a control program from the storage circuit of the controller 50, which is performed by the arithmetic circuit of the controller 50, for example. However, performing the following action by the controller is not necessarily requested. An operator may perform a portion of the action.

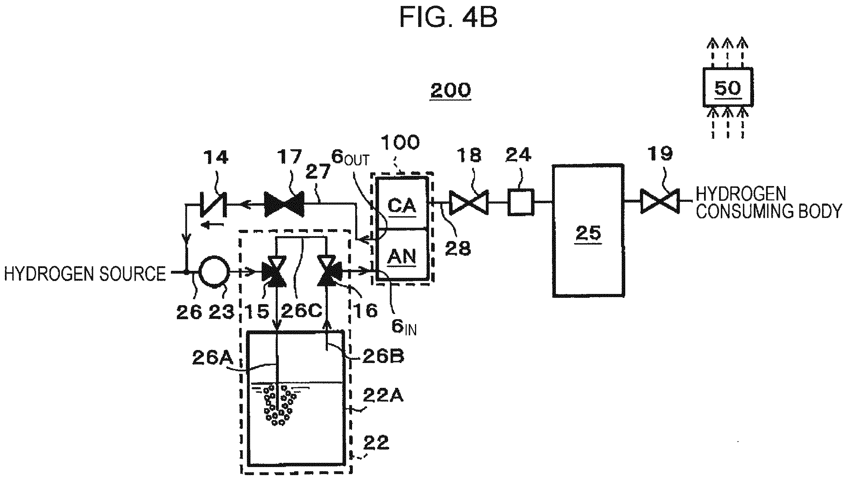

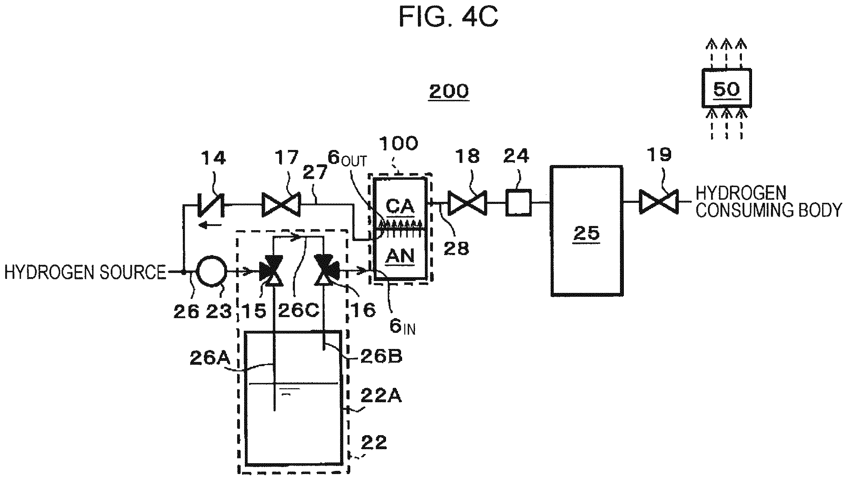

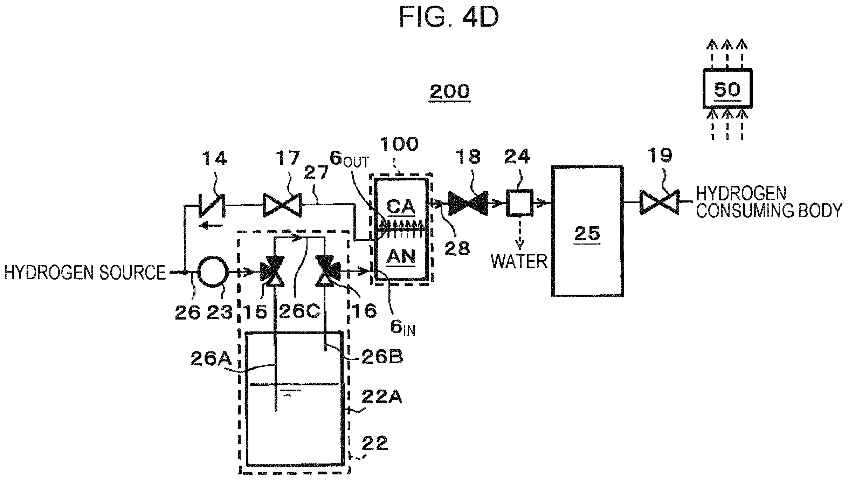

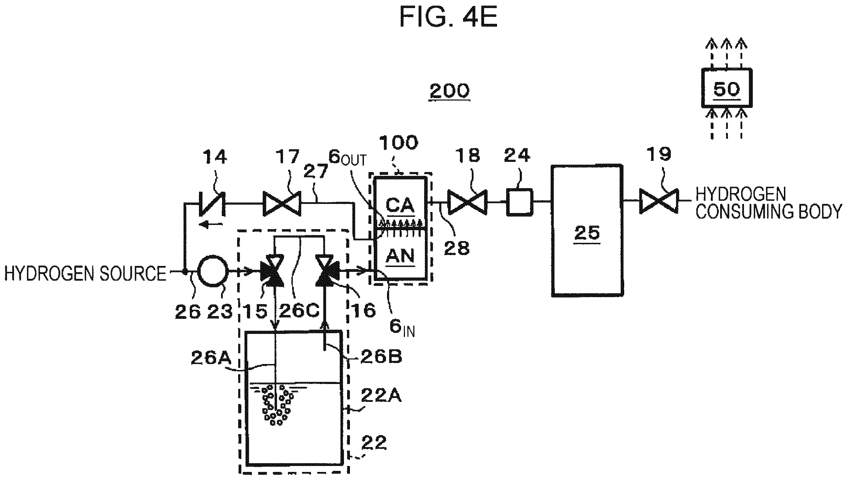

Fig. 4B, Fig. 4C, Fig. 4D, and Fig. 4E are diagrams that illustrate one example of the driving method of the hydrogen supply system of the first practical example of the embodiment.

Fig. 4B illustrates a state where hydrogen in a wet state is supplied to the anode entrance 6_{IN} before the hydrogen pressurization action is started in the electrochemical hydrogen pump 100.

Fig. 4C illustrates a state where the hydrogen pressurization action is performed in the electrochemical hydrogen pump 100 while hydrogen in a dry state is supplied to the anode entrance 6_{IN}.

Fig. 4D illustrates a state where hydrogen is supplied from the electrochemical hydrogen pump 100 to the hydrogen reservoir 25 in the hydrogen pressurization action in Fig. 4C.

Fig. 4E illustrates a state where the hydrogen supplied to the anode entrance 6_{IN} is switched from hydrogen in a dry state to hydrogen in a wet state in the hydrogen pressurization action in Fig. 4C.

Note that in Fig. 4B, Fig. 4C, Fig. 4D, and Fig. 4E, for easy understanding of the contents of the drawings, the open sides of the three-way valve 15 and the three-way valve 16 are indicated by black, and the closed sides are indicated by white for convenience. Further, the on-off valve 17 and the on-off valve 18 in the open state are indicated by black, and the on-off valve 17 and the on-off valve 18 in the closed state are indicated by white. Further, the movement of hydrogen and protons are indicated by arrows.

As illustrated in Fig. 4B, before the hydrogen pressurization action is started in the electrochemical hydrogen pump 100, hydrogen is caused to pass through the warm water in the bubbling tank 22A through the route 26A by operations of the three-way valve 15 and the three-way valve 16, and hydrogen is thereby humidified. Then, hydrogen in a wet state is supplied to the anode entrance 6_{IN} through the route 26B. For example, when the temperature of the warm water in the bubbling tank 22A is made equivalent to the temperature of the electrochemical hydrogen pump 100, fully humidified hydrogen whose relative humidity is almost 100% in the electrochemical hydrogen pump 100 is supplied to the anode entrance 6_{IN}.

In this case, because the on-off valve 17 is opened, the whole amount of hydrogen supplied to the anode entrance 6_{IN} is sent to the hydrogen supply route 26, which is upstream of the hydrogen supplier 23, through the recycle route 27.

In such a manner, a circulation route is formed which extends from the anode exit 6_{OUT} of the electrochemical hydrogen pump 100 via the bubbling tank 22A to the anode entrance 6_{IN}, and hydrogen in a wet state circulates in this circulation route. In a process in which hydrogen in a wet state circulates in the circulation route, the moisture content of the electrolyte membrane 1 rises by water in hydrogen.

When the moisture content of the electrolyte membrane 1 reaches a desired value, as illustrated in Fig. 4C, the hydrogen pressurization action is started in the electrochemical hydrogen pump 100. Further, in this case, hydrogen that flows through the hydrogen supply route 26 bypasses the bubbling tank 22A through the bypass route 26C by operations of the three-way valve 15 and the three-way valve 16. Then, hydrogen in a dry state is supplied to the anode entrance 6_{IN}. In this case, because the on-off valve 17 is closed, the whole amount of hydrogen supplied to the anode entrance 6_{IN} is pressurized and sent to the cathode CA in the electrochemical hydrogen pump 100.

When the pressure of hydrogen of the cathode CA reaches a prescribed high pressure by the hydrogen pressurization action of the electrochemical hydrogen pump 100, as illustrated in Fig. 4D, the on-off valve 18 is opened, and hydrogen is thereby supplied from the electrochemical hydrogen pump 100 through the hydrogen lead-out route 28 to the hydrogen reservoir 25. In this case, water that moves together with hydrogen which flows through the hydrogen lead-out route 28 is removed by the condenser 24.

When the pressure of hydrogen of the cathode CA becomes a prescribed pressure or lower by opening the on-off valve 18, as illustrated in Fig. 4C, the on-off valve 18 is closed, and the hydrogen pressurization action is restarted in the electrochemical hydrogen pump 100.

In such a manner, the hydrogen pressurization action of the electrochemical hydrogen pump 100 in Fig. 4C and a hydrogen supply action to the hydrogen reservoir 25 in Fig. 4D are alternately performed. Then, such actions are repeated, and the amount of water that is present in the electrochemical hydrogen pump 100 thereby gradually decreases as the driving time of the electrochemical hydrogen pump 100 elapses. Then, the moisture content of the electrolyte membrane 1 eventually lowers.

Accordingly, as illustrated in Fig. 4E, the hydrogen supply system 200 of this practical example causes hydrogen to pass through the warm water in the bubbling tank 22A through the route 26A by operations of the three-way valve 15 and the three-way valve 16 and thereby humidifies hydrogen. Then, hydrogen in a wet state is supplied to the anode entrance 6_{IN} through the route 26B. That is, the hydrogen supplied to the anode entrance 6_{IN} is switched from hydrogen in a dry state (Fig. 4C) to hydrogen in a wet state (Fig. 4E). Then, because the humidity of the anode flow path 6 (see Fig. 3A) and the anode AN increases, the moisture content of the electrolyte membrane 1 may be raised by water in hydrogen that is present in the anode flow path 6 and the anode AN.

Note that when the moisture content of the electrolyte membrane 1 reaches a desired value, the hydrogen supplied to the anode entrance 6_{IN} is again switched from hydrogen in a wet state (Fig. 4E) to hydrogen in a dry state (Fig. 4C).

Consequently, the hydrogen supply system 200 and the driving method of the hydrogen supply system 200 of this practical example may lessen the moisture content lowering in the proton-conductive electrolyte membrane during driving of the electrochemical hydrogen pump 100 compared to related art.

Specifically, control for switching the hydrogen supplied to the anode entrance 6_{IN} from hydrogen in a dry state (Fig. 4C) to hydrogen in a wet state (Fig. 4E) is performed, and the moisture content lowering in the electrolyte membrane 1 may thereby be inhibited, which occurs due to movement of water to the outside of the electrochemical hydrogen pump 100 when hydrogen is supplied from the electrochemical hydrogen pump 100 to the hydrogen reservoir 25.

Thus, the hydrogen supply system 200 of this practical example may inhibit an increase in the voltage requested for the pump action due to the moisture content lowering in the electrolyte membrane 1 in the electrochemical hydrogen pump 100 and may thus maintain high efficiency of the hydrogen pressurization action of the electrochemical hydrogen pump 100.

Further, as illustrated in Fig. 4D, when water that moves together with hydrogen from the electrochemical hydrogen pump 100 is removed by the condenser 24, the water amount to be removed by the condenser 24 is decided in accordance with the temperature, pressure, and volume of hydrogen that passes through the condenser 24 by opening the on-off valve 18. Further, the integrated amount of hydrogen that passes through the condenser 24 by opening the on-off valve 18 depends on the integrated value of the driving time of the electrochemical hydrogen pump 100. Thus, in the hydrogen supply system 200 of this practical example, the controller 50 may execute the switching control at an appropriate timing based on an increase in the integrated value of the driving time of the electrochemical hydrogen pump 100.

However, control contents of the controller 50 that are illustrated in Fig. 4B to Fig. 4E are examples, and embodiments are not limited to those examples.

For example, in Fig. 4E, the humidity of the anode flow path 6 and the anode AN is increased by the humidity adjuster 22. However, embodiments are not limited to this. The humidity of the cathode flow path 7 and the cathode CA may be increased by a proper humidity adjuster, which is not illustrated, instead of humidity increases in the anode flow path 6 and the anode AN or together with the humidity increases in the anode flow path 6 and the anode AN.

Further, for example, in Fig. 4E, hydrogen in a wet state is supplied to the anode entrance 6_{IN} through the route 26B during execution of the hydrogen pressurization action of the electrochemical hydrogen pump 100 in Fig. 4C. However, hydrogen in a wet state may be supplied to the anode entrance 6_{IN} through the route 26B during execution of the hydrogen supply action to the hydrogen reservoir 25 in Fig. 4D.

Further, for example, in Fig. 4C, Fig. 4D, and Fig. 4E, the hydrogen pressurization action of the electrochemical hydrogen pump 100, the hydrogen supply action to the hydrogen reservoir 25, and the hydrogen supply action of hydrogen in a wet state to the anode entrance 6_{IN} are respectively performed in a state where the on-off valve 17 is closed. However, the above actions may be performed in a state where the on-off valve 17 is opened.

That is, in the latter case, a portion of hydrogen supplied to the anode entrance 6_{IN} is pressurized and sent to the cathode CA in the electrochemical hydrogen pump 100, and remaining hydrogen is sent from the anode exit 6_{OUT} through the recycle route 27 to the hydrogen supply route 26 that is upstream of the hydrogen supplier 23.

Further, for example, hydrogen reserved in the hydrogen reservoir 25 may be supplied to a hydrogen consuming body (for example, a fuel cell or the like) by opening the on-off valve 19 (for example, a solenoid valve or the like) during execution of the hydrogen pressurization action of the electrochemical hydrogen pump 100 in Fig. 4C and Fig. 4E.

Further, for example, in Fig. 4C and Fig. 4D, hydrogen in a dry state is supplied to the anode entrance 6_{IN}. However, this is an example, and embodiments are not limited to this example. For example, when the relative humidity of hydrogen in the electrochemical hydrogen pump 100 is less than 100%, the moisture content of the electrolyte membrane 1 may lower, even when hydrogen humidified by the humidity adjuster 22 (for example, hydrogen whose relative humidity is approximately 80%) is supplied to the anode entrance 6_{IN}.

Incidentally, even when hydrogen is supplied to the anode entrance 6_{IN} in a state where the on-off valve 17 is opened, the amount of water vapor discharged from the anode exit 6_{OUT} may be predicted from the temperature of the electrochemical hydrogen pump 100 and the amount of hydrogen discharged from the anode exit 6_{OUT}, for example.

Further, when hydrogen with a prescribed dew point or higher is supplied to the anode entrance 6_{IN} in a state where the on-off valve 17 is opened and where the ratio of hydrogen that is pressurized and sent to the cathode CA in the electrochemical hydrogen pump 100 is high, condensed water may be discharged from the anode exit 6_{OUT}. In this case also, the amount of condensed water discharged from the anode exit 6_{OUT} may be predicted by setting an assumption such as that the partial water vapor pressure in the gas of the cathode CA is regularly the saturated water vapor pressure during driving of the electrochemical hydrogen pump 100.

Thus, even when a configuration is employed in which the above water vapor and condensed water discharged from the anode exit 6_{OUT} are discharged to the outside of the recycle route 27, for example, the controller 50 may execute control for switching the hydrogen supplied to the anode entrance 6_{IN} from hydrogen in a dry state (Fig. 4C) to hydrogen in a wet state (Fig. 4E) based on an increase in the integrated value of the driving time of the electrochemical hydrogen pump 100 and at an appropriate timing when the resistance of the electrolyte membrane 1 rises.

The hydrogen supply system 200 of this practical example may be similar to the hydrogen supply system 200 of the embodiment except for the above features.

### (Second Practical Example)

The hydrogen supply system 200 of this practical example is similar to the hydrogen supply system 200 of the embodiment except for the following control contents of the controller 50.

As it may be understood from dotted line portions A in Fig. 1, the start timing of a humidity increase in hydrogen may be identified by detecting an increase in at least one of the resistance between the anode AN and the cathode CA and the voltage applied between the anode AN and the cathode CA.

Accordingly, in the hydrogen supply system 200 in this practical example, the controller 50 controls the humidity adjuster 22 and thereby executes control for increasing the humidity of at least one of the anode flow path 6 and the cathode flow path 7 when at least one of the resistance between the anode AN and the cathode CA and the voltage applied between the anode AN and the cathode CA increases. Accordingly, the controller 50 may execute the control at an appropriate timing based on an increase in at least one of such resistance and voltage.

Thus, the hydrogen supply system 200 of this practical example may quickly handle drying-up of the electrolyte membrane 1 and may thus appropriately inhibit lowering of efficiency of the hydrogen pressurization action of the electrochemical hydrogen pump 100 compared to a case where such control is not performed.

The hydrogen supply system 200 of this practical example may be similar to the hydrogen supply system 200 of the embodiment or the first practical example of the embodiment except for the above features.

### (Third Practical Example)

The hydrogen supply system 200 of this practical example is similar to the hydrogen supply system 200 of the embodiment except for the following control contents of the controller 50.

As it may be understood from dotted line portions B in Fig. 1, the stop timing of a humidity increase in hydrogen may be identified by detecting lowering of at least one of the resistance between the anode AN and the cathode CA and the voltage applied between the anode AN and the cathode CA.

Accordingly, in the hydrogen supply system 200 in this practical example, the controller 50 controls the humidity adjuster 22 and thereby stops control for increasing the humidity of at least one of the anode flow path 6 and the cathode flow path 7 when at least one of the resistance between the anode AN and the cathode CA and the voltage applied between the anode AN and the cathode CA lowers. Accordingly, the controller 50 may stop the control at an appropriate timing based on lowering of at least one of such resistance and voltage.

Thus, the hydrogen supply system 200 of this practical example may inhibit supply of water above a requested amount to the electrolyte membrane 1 and may thus lessen excess of the water amount in the electrochemical hydrogen pump 100 compared to a case where the stopping control is not performed. Further, flooding is possibly caused in the electrochemical hydrogen pump 100 when the water amount in the electrochemical hydrogen pump 100 becomes excessive. However, the hydrogen supply system 200 of this practical example may reduce such a possibility by the stopping control.

The hydrogen supply system 200 of this practical example may be similar to the hydrogen supply system 200 of any of the embodiment and the first practical example and second practical example of the embodiment except for the above features.

Note that the embodiment, the first practical example of the embodiment, the second practical example of the embodiment, and the third practical example of the embodiment may be combined with each other unless those exclude each other.

One aspect of the present disclosure may be used for a hydrogen supply system and a driving method of a hydrogen supply system that lessens moisture content lowering in a proton-conductive electrolyte membrane during driving of an electrochemical hydrogen pump compared to related art.

## Claims

1. A hydrogen supply system (200) comprising:
an electrochemical hydrogen pump (100) that includes a proton-conductive electrolyte membrane (1), an anode which is provided to a first main surface of the proton-conductive electrolyte membrane (1), an anode flow path (6) which is provided on the anode and through which hydrogen flows, a cathode which is provided to a second main surface of the proton-conductive electrolyte membrane (1), a cathode flow path (7) which is provided on the cathode and through which hydrogen flows, and a voltage applicator (21) which applies a voltage between the anode and the cathode, pressurizes and sends hydrogen which is supplied to the anode via the anode flow path (6) to the cathode by applying a voltage by the voltage applicator (21), and supplies the pressurized hydrogen in the cathode flow path (7) to a hydrogen reservoir (25);
a humidity adjuster (22) that adjusts humidity of at least one of the anode flow path (6) and the cathode flow path (7); and
a controller (50) that controls the humidity adjuster (22) and executes control for increasing the humidity of at least one of the anode flow path (6) and the cathode flow path (7) when hydrogen with relative humidity of less than 100% is supplied to the anode flow path (6) and the electrochemical hydrogen pump (100) is driven,
wherein the controller (50) executes the control when an integrated value of driving time of the electrochemical hydrogen pump (100) increases, or
wherein the controller (50) executes the control when the voltage applied between the anode and the cathode increases.

2. The hydrogen supply system (200) according to Claim 1, wherein the controller (50) intermittently executes the control.

3. The hydrogen supply system (200) according to Claim 1, wherein the controller (50) stops the control when the voltage applied between the anode and the cathode lowers.

4. A driving method of a hydrogen supply system (200), wherein the hydrogen supply system (200) is the hydrogen supply system (200) of any one of claims 1 to 3, the driving method comprising:
applying a voltage between an anode and a cathode to pressurize and send hydrogen which is supplied to the anode to the cathode in an electrochemical hydrogen pump (100) that includes a proton-conductive electrolyte membrane (1), the anode which is provided to a first main surface of the proton-conductive electrolyte membrane (1), and the cathode which is provided to a second main surface of the proton-conductive electrolyte membrane (1);
supplying the pressurized hydrogen in the cathode to a hydrogen reservoir (25); and
increasing humidity of at least one of the anode and the cathode in the applying of the voltage when hydrogen with relative humidity of less than 100% is supplied to the anode;
wherein the humidity is controlled by an integrated value of driving time of the electrochemical hydrogen pump (100) or the voltage applied between the anode and the cathode.

## Patentansprüche

1. Wasserstoffversorgungssystem (200), umfassend:
eine elektrochemische Wasserstoffpumpe (100), die eine protonenleitende Elektrolytmembran (1), eine Anode, die an einer ersten Hauptoberfläche der protonenleitenden Elektrolytmembran (1) angebracht ist, einen Anodenströmungsweg (6), der auf der Anode angebracht ist und durch den Wasserstoff strömt, eine Kathode, die an einer zweiten Hauptoberfläche der protonenleitenden Elektrolytmembran (1) angebracht ist, einen Kathodenströmungsweg (7), der auf der Kathode angebracht ist und durch den Wasserstoff strömt, und eine Spannungsanlegevorrichtung (21), die eine Spannung zwischen der Anode und der Kathode anlegt, enthält, Wasserstoff, der der Anode zugeführt wird, unter Druck setzt und durch Anlegen einer Spannung durch die Spannungsanlegevorrichtung (21) über den Anodenströmungsweg (6) zur Kathode schickt und den unter Druck stehenden Wasserstoff im Kathodenströmungsweg (7) einem Wasserstoffreservoir (25) zuführt;
eine Feuchtigkeitseinstellvorrichtung (22), welche die Feuchtigkeit von mindestens einem aus dem Anodenströmungsweg (6) und dem Kathodenströmungsweg (7) einstellt, und
eine Steuereinheit (50), welche die Feuchtigkeitseinstellvorrichtung (22) steuert und eine Steuerungsfunktion zum Erhöhen der Feuchtigkeit von mindestens einem aus dem Anodenströmungsweg (6) und dem Kathodenströmungsweg (7) ausführt, wenn Wasserstoff mit einer relativen Feuchtigkeit von weniger als 100 % dem Anodenströmungsweg (6) zugeführt wird und die elektrochemische Wasserstoffpumpe (100) angesteuert wird,
wobei die Steuereinheit (50) die Steuerungsfunktion ausführt, wenn ein integrierter Wert der Ansteuerungszeit der elektrochemischen Wasserstoffpumpe (100) ansteigt, oder
wobei die Steuereinheit (50) die Steuerungsfunktion ausführt, wenn die zwischen der Anode und der Kathode angelegte Spannung ansteigt.

2. Wasserstoffversorgungssystem (200) gemäß Anspruch 1, wobei die Steuereinheit (50) die Steuerungsfunktion intermittierend ausführt.

3. Wasserstoffversorgungssystem (200) gemäß Anspruch 1, wobei die Steuereinheit (50) die Steuerungsfunktion stoppt, wenn die zwischen der Anode und der Kathode angelegte Spannung sinkt.

4. Verfahren zur Ansteuerung eines Wasserstoffversorgungssystems (200), wobei es sich bei dem Wasserstoffversorgungssystem (200) um das Wasserstoffversorgungssystem (200) nach einem der Ansprüche 1 bis 3 handelt, wobei das Verfahren zur Ansteuerung umfasst:
Anlegen einer Spannung zwischen einer Anode und einer Kathode, um Wasserstoff, der der Anode zugeführt wird, unter Druck zu setzen und in einer elektrochemischen Wasserstoffpumpe (100), die eine protonenleitende Elektrolytmembran (1) enthält, zur Kathode zu schicken, wobei die Anode an einer ersten Hauptoberfläche der protonenleitenden Elektrolytmembran (1) angebracht ist und wobei die Kathode an einer zweiten Hauptoberfläche der protonenleitenden Elektrolytmembran (1) angebracht ist;
Zuführen des unter Druck stehenden Wasserstoffs in der Kathode zu einem Wasserstoffreservoir (25); und
Erhöhen der Feuchtigkeit von mindestens einer aus der Anode und der Kathode beim Anlegen der Spannung, wenn Wasserstoff mit einer relativen Feuchtigkeit von weniger als 100 % der Anode zugeführt wird;
wobei die Feuchtigkeit durch einen integrierten Wert der Ansteuerungszeit der elektrochemischen Wasserstoffpumpe (100) oder der zwischen der Anode und der Kathode angelegten Spannung gesteuert wird.

## Revendications

1. Système de fourniture d'hydrogène (200) comprenant :
une pompe à hydrogène électrochimique (100) qui inclut une membrane à électrolyte conductrice de protons (1), une anode qui est située sur une première surface principale de la membrane à électrolyte conductrice de protons (1), un circuit d'écoulement anodique (6) qui est situé sur l'anode et à travers lequel circule de l'hydrogène, une cathode qui est située sur une seconde surface principale de la membrane à électrolyte conductrice de protons (1), un circuit d'écoulement cathodique (7) qui est situé sur la cathode et à travers lequel circule de l'hydrogène, et un applicateur de tension (21) qui applique une tension entre l'anode et la cathode, pressurise et envoie l'hydrogène, qui est fourni à l'anode via le circuit d'écoulement anodique (6), à la cathode en appliquant une tension au moyen de l'applicateur de tension (21), et fournit l'hydrogène sous pression dans le circuit d'écoulement cathodique (7) à un réservoir d'hydrogène (25) ;
un dispositif de réglage d'humidité (22) qui règle l'humidité du circuit d'écoulement anodique (6) et/ou du circuit d'écoulement cathodique (7) ; et
un module de commande (50) qui commande le dispositif de réglage d'humidité (22) et exécute une commande pour augmenter l'humidité du circuit d'écoulement anodique (6) et/ou du circuit d'écoulement cathodique (7) quand de l'hydrogène ayant une humidité relative inférieure à 100 % est fourni au circuit d'écoulement anodique (6) et que la pompe à hydrogène électrochimique (100) est actionnée,
le module de commande (50) exécutant la commande quand une valeur intégrée de la durée d'actionnement de la pompe à hydrogène électrochimique (100) augmente, ou
le module de commande (50) exécutant la commande quand la tension appliquée entre l'anode et la cathode augmente.

2. Système de fourniture d'hydrogène (200) selon la revendication 1, dans lequel le module de commande (50) exécute la commande par intermittence.

3. Système de fourniture d'hydrogène (200) selon la revendication 1, dans lequel le module de commande (50) stoppe la commande lorsque la tension appliquée entre l'anode et la cathode diminue.

4. Procédé d'actionnement d'un système de fourniture d'hydrogène (200), le système de fourniture d'hydrogène (200) étant le système de fourniture d'hydrogène (200) selon l'une quelconque des revendications 1 à 3, le procédé d'actionnement comprenant :
l'application d'une tension entre une anode et une cathode pour pressuriser et envoyer de l'hydrogène, qui est fourni à l'anode, à la cathode dans une pompe à hydrogène électrochimique (100) qui inclut une membrane à électrolyte conductrice de protons (1), l'anode qui est située sur une première surface principale de la membrane à électrolyte conductrice de protons (1) et la cathode qui est située sur une seconde surface principale de la membrane à électrolyte conductrice de protons (1) ;
la fourniture de l'hydrogène sous pression dans la cathode à un réservoir d'hydrogène (25) ; et
l'augmentation de l'humidité de la cathode et/ou de l'anode lors de l'application de la tension quand de l'hydrogène ayant une humidité relative inférieure à 100 % est fourni à l'anode ;
l'humidité étant commandée par une valeur intégrée de la durée d'actionnement de la pompe à hydrogène électrochimique (100) ou la tension appliquée entre l'anode et la cathode.
